# EUROPEAN PATENT SPECIFICATION

(11) **EP 2 917 779 B1**
(45) Date of publication and mention of the grant of the patent: **18.04.2018**
(21) Application number: 13792789.3
(22) Date of filing: 30.10.2013
(51) Int. Cl.: G02F 1/1333

(54) **LCD ASSEMBLIES AND METHODS FOR MAKING THE SAME**
LCD-ANORDNUNGEN UND VERFAHREN ZUR HERSTELLUNG DAVON
ASSEMBLAGES D'ÉCRAN LCD ET LEURS PROCÉDÉS DE FABRICATION

(30) Priority: 07.11.2012 US 201213671170
(43) Date of publication of application: 16.09.2015
(73) Proprietor: Corning Incorporated, Corning, New York 14831 (US)
(72) Inventor: LI, Cheng-Chung, Painted Post, New York 14870 (US)
(74) Representative: Greene, Simon Kenneth
(86) International application number: PCT/US2013/067457
(87) International publication number: WO 2014/074363

(56) References cited:
- US-A1- 2010 296 027
- US-A1- 2012 075 252

## Description

### Cross-reference to Related Applications

### Background

### Field

The present specification relates generally to liquid crystal display (LCD) assemblies for use in electronic devices for displaying images, and more specifically to LCD assemblies with improved mechanical strength and methods for making the same.

### Technical Background

LCD assemblies are employed in both consumer and commercial electronic devices such as televisions, computer monitors, and the like. LCD assemblies for electronic devices require enhanced strength to be able to withstand not only incidental contact and impacts which may occur when the device is being used, but also other contact and mechanical stress that may occur during the manufacture or transport of the LCD assemblies. Additionally, as the height and width of LCD size increase and the thickness decreases, the mechanical integrity of LCD assembly must be improved to ensure that the LCD cell will not be not damaged during routine activities.

Accordingly, a need exists for alternative LCD assemblies which are mechanically robust.

US2010/296027 discusses a display device with reinforcing glass plates on either side. US2012/0075252 teaches a ruggedized display device with an optical stack for resisting a load, with a top protective coating bonded to an electronic display with a bonding material layer.

### SUMMARY

The embodiments described herein relate to LCD assemblies with improved mechanical strength. According to a first aspect of the invention, there is provided an LCD assembly according to claim 1.

In another aspect of the invention, there is provided a method of manufacturing the LCD assembly according to claim 7.

Additional features and advantages of the embodiments described herein will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

FIG. 1 schematically depicts an exploded cross sectional view of an LCD assembly according to one embodiment shown and described herein;
FIG. 2 schematically depicts the LCD assembly of FIG. 1 as assembled; and
FIG. 3 shows the test results of first principle stress versus time as a ball is dropped onto sample an LCD assembly comprising a back cover glass sheet and an LCD assembly not comprising a back cover glass sheet.

### DETAILED DESCRIPTION

Reference will now be made in detail to various embodiments of LCD assemblies, examples of which are illustrated in the accompanying drawings. Whenever possible, the same reference numerals will be used throughout the drawings to refer to the same or like parts. An LCD assembly, as described herein, generally comprises an LCD cell, a front cover glass sheet, and a back cover glass sheet. The mechanical strength of the LCD assembly is improved by the use of a front cover glass sheet in combination with a back cover glass sheet, where the front cover glass sheet and back cover glass sheet are positioned on opposite sides of the LCD cell. In some embodiments of the LCD assembly disclosed herein, the front cover glass sheet and the back cover glass sheet have similar or identical coefficients of thermal expansion (CTE's). Embodiments of the LCD assembly and method for making LCD assembly will be described in more detail herein with specific reference to the appended drawings.

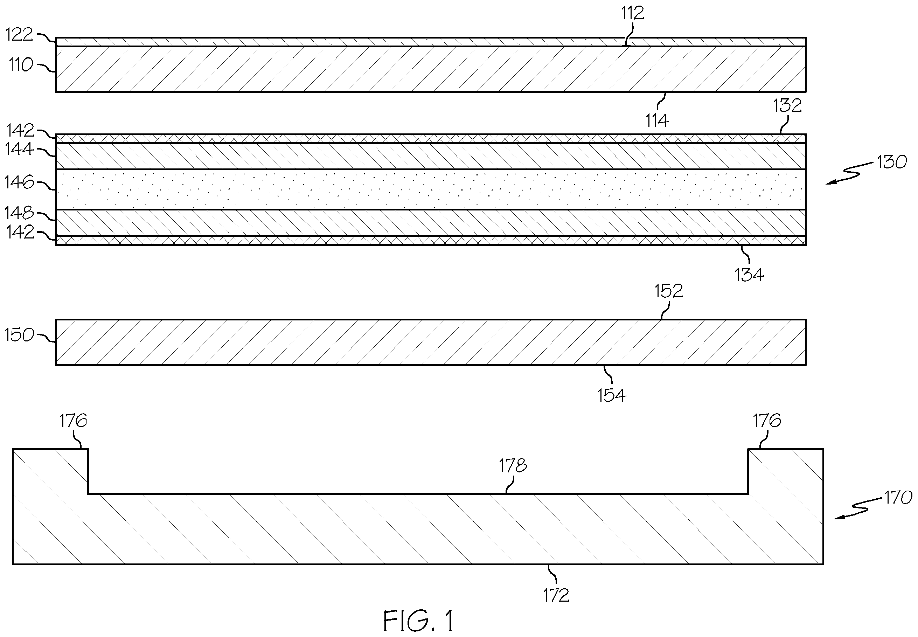

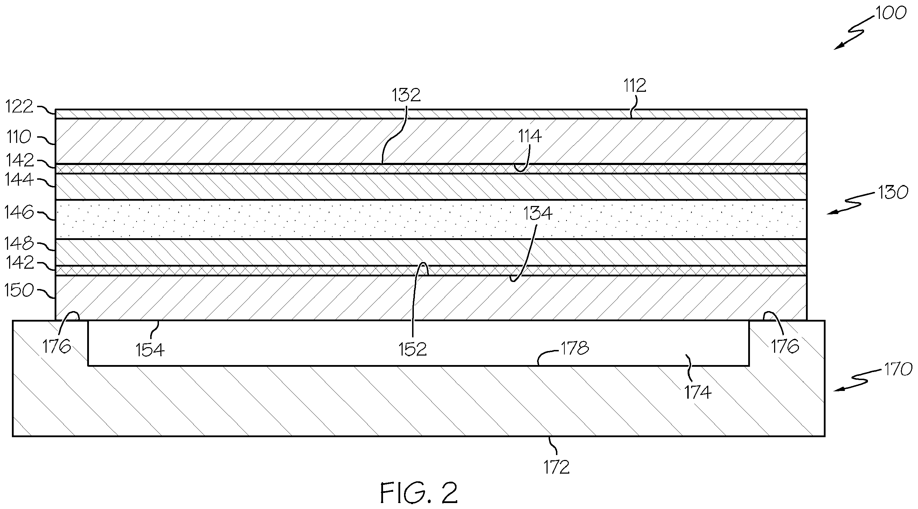

Referring now to FIGS. 1 and 2, exploded (FIG. 1) and assembly (FIG. 2) views of one embodiment of an LCD assembly 100 are schematically depicted. In the embodiments of the LCD assemblies 100 described herein, the LCD assemblies 100 include an LCD cell 130, a front cover glass sheet 110, and a back cover glass sheet 150, where the front cover glass sheet 110 and back cover glass sheet 150 are bonded to the LCD cell 130.

The front cover glass sheet 110 is formed from a strengthened glass. In some embodiments, the strengthened glass may be ion-exchange strengthened glass, such as an alkali-alumino silicate glass. Examples of suitable strengthened glass include, without limitation, ion-exchange strengthened Gorilla™ Glass and Gorilla™ Glass 2 manufactured by Coming, Inc. However, it should be understood that other strengthened glasses may be used for the front cover glass sheet 110. The front cover glass sheet 110 has a top surface 112 and an underside surface 114, each of which include a layer of compressive stress which is imparted to the front cover glass sheet 110 by a strengthening process. The compressive stress extends from both the top surface 112 and the underside surface 114 of the front cover glass sheet 110 into the thickness of the front cover glass sheet 110. The compressive stress improves the mechanical strength of the front cover glass sheet 110 and generally mitigates failure of the front cover glass sheet 110 due to incidental damage (i.e., chips, scratches, or the like). In the embodiments described herein, the compressive stress in the front cover glass sheet 110 may be about 500 MPa or greater and have a depth of layer (DOL) which is greater than or equal to about 30 µm. For example, in some embodiments, the compressive stress may be greater than or equal to 800 MPa or even greater than or equal to 950 MPa. In some embodiments, the DOL may be greater than or equal to about 40 µm or even greater than or equal to about 50 µm. The compressive stress and DOL are determined based on the stress birefringence of the glass as specified in ASTM Standard C1422.

In the embodiments described herein, the front cover glass sheet 110 generally has a thickness T₁ which is less than or equal to about 2 mm. In one embodiment, the front cover glass sheet 110 may have a thickness T₁ which is in a range from about 0.2 mm to about 2 mm. In another embodiment, the front cover glass sheet 110 may have a thickness T₁ which is in a range from about 0.3 mm to about 1 mm. In one exemplary embodiment, the front cover glass sheet 110 has a thickness T₁ of about 0.4 mm.

The LCD assembly 100 may optionally comprise an anti-reflective layer 122 positioned in contact with the top surface 112 of the front cover glass sheet 110. The anti-reflective layer 122 may comprise multiple layers of optical coating or a laminated anti-reflective film. FIG. 1 shows the anti-reflective layer 122 disposed on the front cover glass sheet 110 in an unassembled view. However, in some embodiments, the anti-reflective layer 122 may be added to the front cover glass sheet 110 following the assembly of the front cover glass sheet 110 to the LCD cell 130.

The LCD cell 130 may be any commercially available LCD cell suitable for use in an LCD TV, LCD monitor, or other similar display. The LCD cell 130 comprises a top surface 132 and an underside surface 134 to which the front cover glass sheet 110 and back cover glass sheet 150 are attached, respectively. The LCD cell 130 may generally comprise a liquid crystal material layer 146, a color filter layer 144, a thin film transistor (TFT) layer 148, and at least one polarizer layer 142. The liquid crystal material layer 146 may comprise any liquid crystal substance suitable for use as a liquid crystal in an LCD cell. The TFT layer 148 may comprise a glass sheet, such as for example a glass sheet that acts as a substrate in the TFT layer 148 and onto which a multitude of thin film transistors are deposited. The color filter layer 144 may comprise a glass sheet that has color filtering properties, such as to allow for a color to be viewed on an image projected from the LCD assembly 100 when installed into an electronic device such as a television. In one embodiment, the LCD cell 130 comprises two polarizer layers 142. The polarizer layers 142 may be any layer suitable for use as a light polarizing material such as to allow for the operation of the LCD cell 130. In one embodiment, a polarizer layer 142 may comprise a polarizer film.

The LCD cell 130 of the LCD assembly 100 described herein may have various constructs based on the ordering and placement of the various components and layers of the LCD cell 130. For example, in one embodiment, the TFT layer 148 is attached to the liquid crystal material layer 146 near the underside surface 134 of the LCD cell 130 and the color filter layer 144 is attached to the liquid crystal material layer 146 near the top surface 132 of the LCD cell 130. In such an arrangement, the color filter layer 144 is positioned closer to the top surface 112 of the front cover glass sheet 110 than the TFT layer 148. Polarizer layers 140 may be positioned in contact with the outer surfaces of the TFT layer 148, the color filter layer 144, or both. However, it should be understood that the polarizer layers 140 may be disposed in other positions in the LCD cell 130.

The back cover glass sheet 150 is formed from a strengthened glass. In some embodiments, the strengthened glass may be ion-exchange strengthened glass, such as an alkali-alumino silicate glass. Examples of suitable strengthened glass include, without limitation, ion-exchange strengthened Gorilla™ Glass and Gorilla™ Glass 2 manufactured by Coming, Inc. However, it should be understood that other strengthened glasses may be used for the back cover glass sheet 150. The back cover glass sheet 150 has a top surface 152 and an underside surface 154, each of which include a layer of compressive stress which is imparted to the back cover glass sheet 150 by a strengthening process. The compressive stress extends from both the top surface 152 and the underside surface 154 of the back cover glass sheet 150 into the thickness of the back cover glass sheet 150. The compressive stress improves the mechanical strength of the back cover glass sheet 150 and generally mitigates failure of the back cover glass sheet 150 due to incidental damage (i.e., chips, scratches, or the like). In the embodiments described herein, the compressive stress in the back cover glass sheet 150 may be about 500 MPa or greater and have a depth of layer (DOL) which is greater than or equal to about 30 µm. For example, in some embodiments, the compressive stress may be greater than or equal to 800 MPa or even greater than or equal to 950 MPa. In some embodiments, the DOL may be greater than or equal to about 40 µm or even greater than or equal to about 50 µm. The compressive stress and DOL are determined based on the stress birefringence of the glass as specified in ASTM Standard C1422.

In the embodiments described herein, the back cover glass sheet 150 generally has a thickness T₂ which is less than or equal to about 2 mm. In one embodiment, the back cover glass sheet 150 may have a thickness T₂ which is in a range from about 0.2 mm to about 2 mm. In another embodiment, the back cover glass sheet 150 may have a thickness T₂ which is in a range from about 0.3 mm to about 1 mm. In one exemplary embodiment, the back cover glass sheet 150 has a thickness T₂ of about 0.4 mm. In some embodiments, T₁ and T₂ are substantially the same. In other embodiments, T₁ and T₂ may be within about 50%, within about 25%, or even within about 10% of one another, where T₁ may be greater than T₂ or T₁ maybe less than T₂.

Furthermore, the front cover glass sheet 110 has a coefficient of thermal expansion CTE₁ and the back cover glass sheet 150 has a coefficient of thermal expansion CTE₂. In embodiments where the front cover glass sheet 110, the back cover glass sheet 150, or both, are alkali-alumino silicate glass, CTE₁ and/or CTE₂ may be in the range from about 75x10⁻⁷/°C to about 100x10⁻⁷/°C. In one embodiment, CTE₁ and/or CTE₂ maybe in the range from about 80x10⁻⁷/°C to about 85x10⁻⁷/°C. For example, when the front cover glass sheet 110 and/or the back cover glass sheet 150 is formed from Gorilla™ Glass, CTE₁ and/or CTE₂ is on the order of about 84.5x10⁻⁷/°C from 0°C to about 300°C. Alternatively, when the front cover glass sheet 110 and/or the back cover glass sheet 150 is formed from Gorilla™ Glass 2, CTE₁ and/or CTE₂ is on the order of about 80x10⁻⁷/°C from 0°C to about 300°C.

The existence of identical or similar CTE's for the front cover glass sheet 110 and back cover glass sheet 150 may balance the forces on the LCD cell 130 that are produced by the front cover glass sheet 110 and back cover glass sheet 150 and may increase the strength of the LCD assembly 100. Specifically, when the back cover glass sheet 150 and the front cover glass sheet 110 have similar coefficients of thermal expansion, the differential expansion between the back cover glass sheet 150 and the front cover glass sheet 110 is minimized, balancing the forces on the LCD cell 130 from the back cover glass sheet 150 and the front cover glass sheet 110 at various temperatures. Accordingly, in some embodiments described herein, the back cover glass sheet 150 generally comprises a strengthened glass which has a coefficient of thermal expansion CTE₂ which is similar to the coefficient of thermal expansion CTE₁ of the front cover glass sheet 110.

In some embodiments, CTE₁ may be within +/- 15.0x10⁻⁷/°C of CTE₂ or even within +/- 10.0x10⁻⁷/°C of CTE₂. For example, in one embodiment CTE₂ of the back cover glass sheet 150 is the same as CTE₁ of the front cover glass sheet 110 (i.e., CTE₂ = CTE₁). In some embodiments, CTE₁ maybe within +/- 25% of CTE₂ or even within +/- 10% of CTE₂.

In some embodiments, the front cover glass sheet 110 and the back cover glass sheet 150 are formed from glasses which have substantially the same composition in order to minimize the difference between the coefficients of thermal expansion of the front cover glass sheet 110 and the back cover glass sheet 150. The phrase "substantially the same composition," as used herein, refers to the composition of the back cover glass sheet 150 and the composition of the front cover glass sheet 110 prior to a strengthening process, such as an ion-exchange strengthening process. Further, it should also be understood that, in other embodiments, the front cover glass sheet 110 and the back cover glass sheet 150 need not be formed from glass with the same or substantially the same composition to achieve the desired similarity with respect the CTE's.

The LCD assembly 100 further comprises a light source 170 that is capable of projecting light onto the underside surface 154 of the back cover glass sheet 150 and through the LCD cell 130 and top surface 112 of the front cover glass sheet 110 to display an image. In one embodiment, the light source 170 is an LED backlight. In one embodiment, the light source 170 generally comprises a backside surface 172, a plurality of attachment points 176, and a recessed area 178. The attachment points 176 project out of the body of the light source 170 and define the recessed area 178, such that when a relatively flat back cover glass sheet 150 is in contact with the attachment points 176, an air gap 174 is formed between the back cover glass sheet 150 and the light source 170.

Referring now to the assembled view of FIG. 2, the underside surface 114 of the front cover glass sheet 110 may be directly bonded to the top surface 132 of the LCD cell 130 and the top surface 152 of the back cover glass sheet 150 may be directly bonded to the underside surface 134 of the LCD cell 130. As used herein, "directly bonded" refers to physical attachment of two or more bodies where the two or more bodies are in direct contact with one another or where there is a bonding material disposed between at least portions of the two bodies. Such a bonding material may enhance the strength of attachment between the two bodies. In one embodiment, the front cover glass sheet 110, the back cover glass sheet 150, or both, may be directly bonded to the LCD cell 130 with a bonding material, such as an adhesive. The adhesive may be an optically clear adhesive. Optically clear adhesives may be made with an acrylic base or silicone base in the liquid form and may be UV cured, thermally cured, or air cured. In another embodiment, the front cover glass sheet 110, the back cover glass sheet 150, or both, may be directly bonded to the LCD cell 130 by lamination. A lamination process may utilize dry film lamination or a liquid optically clear adhesive.

In an assembled state, the LCD assembly 100 may comprise a light source 170 that is positioned in contact with the underside surface 154 of the back cover glass sheet 150 at attachment points 176. The recessed area 178 of the light source 170 may create an air gap 174 that is disposed between the light source 170 and the back cover glass sheet 150. The air gap 174 may have a length measured in the same direction as T₁ and T₂ of between about 0.5 mm and about 4 mm. The air gap 174 may allow for some flexure of the front cover glass sheet 110, LCD cell 130, and back cover glass sheet 150.

Also described herein is a method for producing an LCD assembly 100 for displaying an image. The method may generally comprise supplying the LCD cell 130, the front cover glass sheet 110, and the back cover glass sheet 150, and directly bonding the underside surface 114 of the front cover glass sheet 110 to the top surface 132 of the LCD cell 130 and the top surface 152 of the back cover glass sheet 150 to the underside surface 134 of the LCD cell 130. The method may further comprise supplying the light source 170 capable of projecting light onto the underside surface 154 of the back cover glass sheet 150 and through the LCD cell 130 and the top surface 112 of the front cover glass sheet 110 to display an image, and attaching the light source 17 to the back cover glass sheet 150 such as to allow for an air gap 174 to be disposed between the light source 170 and the back cover glass sheet 150.

The LCD assemblies 100 described herein may have improved mechanical strength. For example, in one embodiment the LCD assemblies 100 described herein may have a stacked strength of greater than about 75 kgf, greater than about 95 kgf, or even greater than about 110 kgf when measured by a load to failure ring-on-ring test. An LCD assembly that does not comprise a back cover glass sheet 150 with a similar front cover glass sheet may only have a stacked strength of about 65 kgf

The LCD assemblies 100 described herein may have reduced mechanical stress when exposed to a ball drop test. For example, in one embodiment, the LCD assembly 100 comprising a back cover glass sheet 150 had at least about 15% less maximum first principle stress, about 20% less maximum first principle stress, or even about 23% less maximum first principle stress, than an LCD assembly not comprising a back cover glass sheet. Details of the experiments used to attain this data can be found in Example 1, below.

### Example 1

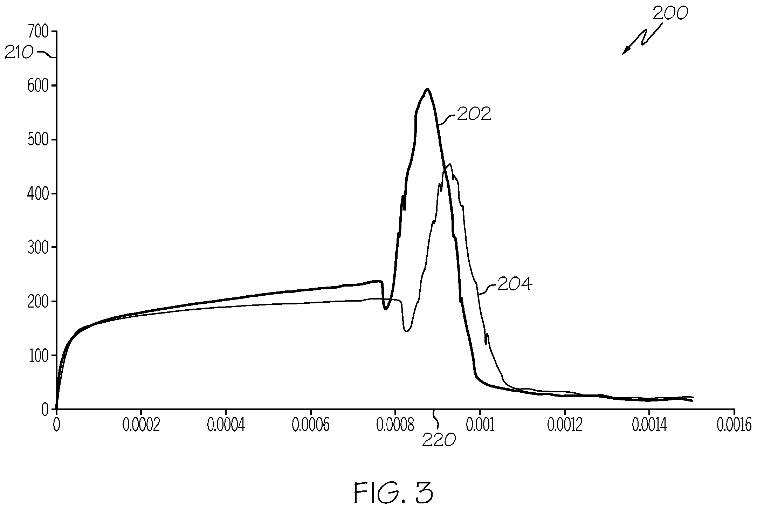

Mechanical stress data was generated for an LCD assembly as described herein (comprising a back cover glass sheet) and an LCD assembly that did not comprise a back cover glass sheet. FIG. 3 shows a plot 200 of the first principle stress (measured in MPa) versus time (measured in seconds) as a ball is dropped onto sample LCD assemblies. First principle stress is recorded on the vertical axis 210 as a function of time on the horizontal axis 220. Data line 202 shows the data set corresponding to an LCD assembly which does not comprise a back cover glass sheet 150. The LCD without a back cover glass sheet used in this example (corresponding to data line 202) comprised a 0.55 mm thick front cover glass sheet, a 1.2 mm thick LCD cell, and an LED backlight with a 2 mm air gap disposed between the LED backlight and the LCD cell. Data line 204 shows the data set corresponding to an LCD assembly as described herein which comprises a back cover glass sheet 150. The LCD assembly with a back cover glass sheet 150 used in this example (corresponding to data line 204) comprised a 0.55 mm thick front cover glass sheet, a 1.2 mm thick LCD cell, a 0.55 mm thick back cover glass sheet 150, and an LED backlight with a 2 mm air gap disposed between the LED backlight and the back cover glass sheet 150. In all of the LCD assembly samples of this example, the cover glass sheets were about 1238 mm X 720.2 mm X 0.55 mm and the force of the ball that was dropped was 2 joules. The ball was dropped perpendicular to the height and length of the front cover glass sheet and parallel to the thickness of the front cover glass sheet. Time = 0 corresponds to the point where the ball first made contact with the sample LCD assembly. When the ball drop test was performed, the LCD assembly comprising a back cover glass sheet (corresponding to data line 204) had a maximum first principle stress of about 450 MPa, while the LCD assembly not comprising a back cover glass sheet (corresponding to data line 202) had a maximum first principle stress of about 590 MPa. Thus, the LCD assembly comprising a back cover glass sheet (corresponding to data line 204) had about 23.7% less maximum first principle stress than the LCD assembly not comprising a back cover glass sheet (corresponding to data line 202).

It should now be understood that the LCD assemblies described herein have improved mechanical strength and damage tolerance. The improved mechanical properties are achieved by using a front cover glass sheet 110 and a back cover glass sheet 150 that may have similar coefficients of thermal expansion. Moreover, due to the improved mechanical properties of the LCD assemblies, the LCD assemblies are well suited for use in various electronic devices and particularly well suited for use in televisions or other electronic displays. In a first aspect, the LCD assembly is as recited in claim 1.

In a second aspect, the LCD cell of the first aspect may further comprise a liquid crystal material, a color filter layer, and a thin film transistor layer, wherein the color filter layer may be positioned closer to the first surface of the LCD cell than the thin film transistor layer.

In a third aspect, the LCD assembly of the first aspect has a coefficient of thermal expansion of the front cover glass sheet that may be within +/- 15.0x10⁻⁷/°C of a coefficient of thermal expansion of the back cover glass sheet.

In a fourth aspect, the LCD assembly of the first aspect has a coefficient of thermal expansion of the front cover glass sheet may be within +/- 25% of a coefficient of thermal expansion of the back cover glass sheet.

In a fifth aspect, the front cover glass sheet and the back cover glass sheet of the first aspect have substantially the same composition.

In a sixth aspect, the LCD assembly of the first aspect has at least about 23% less maximum first principle stress than an LCD assembly not comprising a back cover glass sheet.

In a seventh aspect, the front cover glass sheet of the first aspect has a thickness from about 0.2 mm to about 2 mm and the back cover glass sheet of the first aspect has a thickness from about 0.2 mm to about 2 mm.

In an eighth aspect, the LCD assembly of the first aspect comprises a light source capable of projecting light onto the second surface of the back cover glass sheet and through the LCD cell and the first surface of the front cover glass sheet to display the image.

In a ninth aspect, the LCD assembly of the eighth aspect comprises an air gap disposed between the light source and the back cover glass sheet.

In a tenth aspect, the light source of the eighth aspect may comprise an LED backlight.

In an eleventh aspect, the front cover glass sheet of the first aspect, the back cover glass sheet of the first aspect, or both, may be directly bonded to the LCD cell of the first aspect with a bonding material.

In a twelfth aspect, the bonding material of the eleventh aspect may be an optically clear adhesive.

In a thirteenth fifteenth aspect, the front cover glass sheet of the first aspect, the back cover glass sheet of the first aspect, or both, are directly bonded to the LCD cell of the first aspect by lamination.

In a fourteenth sixteenth aspect, the LCD cell of the first aspect may further comprise two polarizer layers.

In a fifteenth aspect, the LCD assembly of the first aspect may further comprise an anti-reflective layer positioned in contact with the front cover glass sheet.

In n sixteenth aspect, an LCD assembly for displaying an image may be produced by a method as recited in claim 7.

In a seventeenth aspect, the method of the sixteenth aspect comprises: supplying a light source capable of projecting light onto the second surface of the back cover glass sheet and through the LCD cell and the first surface of the front cover glass sheet to display the image; and attaching the light source to the back cover glass sheet such as to allow for an air gap to be disposed between the light source and the back cover glass sheet.

In an eighteenth aspect, a coefficient of thermal expansion of the front cover glass sheet of the sixteenth aspect may be within +/- 15.0x10⁻⁷/°C of a coefficient of thermal expansion of the back cover glass sheet of the sixteenth aspect.

In a nineteenth aspect, the front cover glass sheet of the sixteenth aspect has a thickness of between about 0.2 mm to about 2 mm and the back cover glass sheet of the sixteenth aspect has a thickness of between about 0.2 mm to about 2 mm.

In a twentieth aspect, the front cover glass sheet of the sixteenth aspect, the back cover glass sheet of the sixteenth aspect, or both, are directly bonded to the LCD cell of the sixteenth aspect with a bonding material.

## Claims

1. An LCD assembly (100) comprising:
an LCD cell (130) comprising a first surface (132) and a second surface (134);
a front cover glass sheet (110) comprising a first surface (112) and a second surface (114), the first surface (112) and second surface (114) of the front cover glass sheet (110) defining a front cover glass sheet thickness, wherein the second surface (114) of the front cover glass sheet (110) is directly bonded to the first surface (132) of the LCD cell (130), and wherein the front cover glass sheet (110) comprises strengthened glass;
a back cover glass sheet (150) comprising a first surface (152) and a second surface (154), the first surface (152) and second surface (154) of the back cover glass sheet (150) defining a back cover glass sheet thickness, wherein the first surface (152) of the back cover glass sheet (150) is directly bonded to the second surface (134) of the LCD cell (130), and wherein the back cover glass sheet (150) comprises strengthened glass; and
wherein the LCD assembly (100) further comprises a light source (170) configured to project light onto the second surface (154) of the back cover glass sheet (150) and through the LCD cell (130) and the first surface (112) of the front cover glass sheet (110) to display an image,
**characterised in that** the light source (170) comprises a body and attachment points (176) projecting out of the body of the light source (170) and in contact with the second surface (154) of the back cover glass sheet (150), the attachment points defining a recessed area (178) thereby forming an air gap (174) between the light source (170) and the back cover glass sheet (150).

2. The LCD assembly of claim 1, wherein the LCD cell (130) further comprises a liquid crystal material (146), a color filter layer (144), and a thin film transistor layer (148), wherein the color filter layer (144) is positioned closer to the first surface (132) of the LCD cell (130) than the thin film transistor layer (148).

3. The LCD assembly of claims 1 or claim 2 , wherein a coefficient of thermal expansion of the front cover glass sheet (110) is within +/- 25% of a coefficient of thermal expansion of the back cover glass sheet (150).

4. The LCD assembly of any one of claims 1 to 3, wherein the LCD assembly (100) has at least about 23% less maximum first principle stress than an LCD assembly not comprising a back cover glass sheet.

5. The LCD assembly of any one of claims 1 to 4, wherein the front cover glass sheet (110) has a thickness in a range from 0.2 mm to 2 mm and the back cover glass sheet (150) has a thickness in a range from 0.2 mm to 2 mm.

6. The LCD assembly of any one of claims 1 to 5, wherein the front cover glass sheet (110), the back cover glass sheet (150), or both, is directly bonded to the LCD cell (130) with a bonding material.

7. A method for producing an LCD assembly for displaying an image, the method comprising:
directly bonding a front cover glass sheet (110) to a first surface (132) of an LCD cell (130);
directly bonding a back cover glass sheet (150) to a second surface (134) of the LCD cell (130);
wherein both the front and back cover glass sheets (110,150) comprise strengthened glass; and attaching a light source (170) comprising a body and attachment points (176) projecting out of the body of the light source (170) and in contact with the surface (154) of the back cover glass sheet (150) which is not bonded to the LCD cell (130), such that there is an air gap between the light source (170) and the back cover glass sheet (150) and the light source (170) is configured to project light onto the surface (154) of the back cover glass sheet (150) which is not bonded to the LCD cell (130) and through the LCD cell (130) and the front cover glass sheet (110) to display an image.

8. The method of claim 7, wherein a coefficient of thermal expansion of the front cover glass sheet (110) is within +/- 15.0x10⁻⁷/°C of a coefficient of thermal expansion of the back cover glass sheet (150).

## Patentansprüche

1. LCD-Anordnung (100), umfassend:
eine LCD-Zelle (130) umfassend eine erste Oberfläche (132) und eine zweite Oberfläche (134);
eine Vorderdeckglasscheibe (110) umfassend eine erste Oberfläche (112) und eine zweite Oberfläche (114), wobei die erste Oberfläche (112) und zweite Oberfläche (114) der Vorderdeckglasscheibe (110) eine eine Vorderdeckglasscheibendicke definieren, wobei die zweite Oberfläche (114) der Vorderdeckglasscheibe (110) unmittelbar an die erste Oberfläche (132) der LCD-Zelle (130) geklebt ist, und wobei die Vorderdeckglasscheibe (110) verstärktes Glas umfasst;
eine Hinterdeckglasscheibe (150) umfassend eine erste Oberfläche (152) und eine zweite Oberfläche (154), wobei die erste Oberfläche (152) und zweite Oberfläche (154) der Hinterdeckglasscheibe (150) eine eine Hinterdeckglasscheibendicke definieren, wobei die erste Oberfläche (152) der Hinterdeckglasscheibe (150) unmittelbar an die zweite Oberfläche (134) der LCD-Zelle (130) geklebt ist, und wobei die Hinterdeckglasscheibe (150) verstärktes Glas umfasst; und
wobei die LCD-Anordnung (100) ferner eine Lichtquelle (170) umfasst, die so gestaltet ist, dass sie Licht auf die zweite Oberfläche (154) der Hinterdeckglasscheibe (150) und durch die LCD-Zelle (130) und die erste Oberfläche (112) der Vorderdeckglasscheibe (110) projiziert, um ein Bild anzuzeigen,
**dadurch gekennzeichnet, dass** die Lichtquelle (170) einen Körper und Anbringungspunkte (176), die aus dem Körper der Lichtquelle (170) herausragen und in Kontakt mit der zweiten Oberfläche (154) der Hinterdeckglasscheibe (150) sind, umfasst, wobei die Anbringungspunkte einen ausgesparten Bereich (178) definieren, wodurch ein Luftspalt (174) zwischen der Lichtquelle (170) und der Hinterdeckglasscheibe (150) gebildet wird.

2. LCD-Anordnung nach Anspruch 1, wobei die LCD-Zelle (130) ferner ein Flüssigkristallmaterial (146), eine Farbfilterschicht (144) und eine Dünnfilmtransistorschicht (148) umfasst, wobei die Farbfilterschicht (144) näher zur ersten Oberfläche (132) der LCD-Zelle (130) positioniert ist als die Dünnfilmtransistorschicht (148).

3. LCD-Anordnung nach Anspruch 1 oder Anspruch 2, wobei ein Wärmeausdehnungskoeffizient der Vorderdeckglasscheibe (110) innerhalb +/- 25% eines Wärmeausdehnungskoeffizienten der Hinterdeckglasscheibe (150) liegt.

4. LCD-Anordnung nach einem der Ansprüche 1 bis 3, wobei die LCD-Anordnung (100) mindestens etwa 23% weniger maximale erste Hauptspannung aufweist als eine LCD-Anordnung, die keine Hinterdeckglasscheibe umfasst.

5. LCD-Anordnung nach einem der Ansprüche 1 bis 4, wobei die Vorderdeckglasscheibe (110) eine Dicke in einem Bereich von 0,2 mm bis 2 mm aufweist und die Hinterdeckglasscheibe (150) eine Dicke in einem Bereich von 0,2 mm bis 2 mm aufweist.

6. LCD-Anordnung nach einem der Ansprüche 1 bis 5, wobei die Vorderdeckglasscheibe (110), die Hinterdeckglasscheibe (150) oder beide unmittelbar an die LCD-Zelle (130) mit einem Klebstoff geklebt sind.

7. Verfahren zum Herstellen eine LCD-Anordnung zur Anzeige eines Bildes, wobei das Verfahren Folgendes umfasst:
unmittelbares Kleben einer Vorderdeckglasscheibe (110) an eine erste Oberfläche (132) einer LCD-Zelle (130);
unmittelbares Kleben einer Hinterdeckglasscheibe (150) an eine zweite Oberfläche (134) einer LCD-Zelle (130);
wobei sowohl die Vorder- als auch die Hinterdeckglasscheibe (110,150) verstärktes Glas umfassen;
und Anbringen einer Lichtquelle (170) umfassend einen Körper und Anbringungspunkte (176), die aus dem Körper der Lichtquelle (170) herausragen und in Kontakt mit der Oberfläche (154) der Hinterdeckglasscheibe (150) sind, die nicht an die LCD-Zelle (130) geklebt ist, so dass es einen Luftspalt zwischen der Lichtquelle (170) und der Hinterdeckglasscheibe (150) gibt und die Lichtquelle (170) so gestaltet ist, dass sie Licht auf die Oberfläche (154) der Hinterdeckglasscheibe (150), die nicht an die LCD-Zelle (130) geklebt ist, und durch die LCD-Zelle (130) und die Vorderdeckglasscheibe (110) projiziert, um ein Bild anzuzeigen.

8. Verfahren nach Anspruch 7, wobei ein Wärmeausdehnungskoeffizient der Vorderdeckglasscheibe (110) innerhalb von +/- 15,0x10⁻⁷/°C eines Wärmeausdehnungskoeffizienten der Hinterdeckglasscheibe (150) liegt.

## Revendications

1. Ensemble de dispositif d'affichage à cristaux liquide (LCD) (100) comprenant :
une cellule de LCD (130) comprenant une première surface (132) et une seconde surface (134) ; une feuille de verre de protection avant (110) comprenant une première surface (112) et une seconde surface (114), ladite première surface (112) et ladite seconde surface (114) de la feuille de verre de protection avant (110) définissant une épaisseur de feuille de verre de protection avant, ladite seconde surface (114) de la feuille de verre de protection avant (110) étant directement liée à la première surface (132) de la cellule de LCD (130), et ladite feuille de verre de protection avant (110) comprenant un verre renforcé ;
une feuille de verre de protection arrière (150) comprenant une première surface (152) et une seconde surface (154), ladite première surface (152) et ladite seconde surface (154) de la feuille de verre de protection arrière (150) définissant une épaisseur de feuille de verre de protection arrière, ladite première surface (152) de la feuille de verre de protection arrière (150) étant directement liée à la seconde surface (134) de la cellule de LCD (130) et ladite feuille de verre de protection arrière (150) comprenant un verre renforcé ; et
ledit ensemble LCD (100) comprenant en outre une source lumineuse (170) conçue pour projeter une lumière sur la seconde surface (154) de la feuille de verre de protection arrière (150) et à travers la cellule de LCD (130) et la première surface (112) de la feuille de verre de protection avant (110) pour afficher une image, **caractérisé en ce que** la source lumineuse (170) comprend un corps et des points de fixation (176) se projetant hors du corps de la source lumineuse (170) et étant en contact avec la seconde surface (154) de la feuille de verre de protection arrière (150), lesdits points de fixation définissant une zone évidée (178) formant ainsi un vide d'air (174) entre la source lumineuse (170) et la feuille de verre de protection arrière (150).

2. Ensemble LCD selon la revendication 1, ladite cellule de LCD (130) comprenant en outre un matériau de cristaux liquides (146), une couche de filtre de couleur (144) et une couche de transistor à film mince (148), ladite couche de filtre de couleur (144) étant positionnée plus près de la première surface (132) de la cellule de LCD (130) que la couche de transistor à film mince (148).

3. Ensemble LCD selon la revendications 1 ou 2, un coefficient de dilatation thermique de la feuille de verre de protection avant (110) étant compris dans une plage de +/-25 % d'un coefficient de dilatation thermique de la feuille de verre de protection arrière (150).

4. Ensemble LCD selon l'une quelconque des revendications 1 à 3, ledit ensemble LCD (100) présentant une première contrainte principale maximale inférieure d'au moins environ 23 % à celle d'un ensemble LCD ne comprenant pas de feuille de verre de protection arrière.

5. Ensemble LCD selon l'une quelconque des revendications 1 à 4, ladite feuille de verre de protection avant (110) possédant une épaisseur comprise dans une plage allant de 0,2 mm à 2 mm et ladite feuille de verre de protection arrière (150) possédant une épaisseur comprise dans une plage allant de 0,2 mm à 2 mm.

6. Ensemble LCD selon l'une quelconque des revendications 1 à 5, ladite feuille de verre de protection avant (110) et/ou ladite feuille de verre de protection arrière (150) étant directement liées à la cellule de LCD (130) avec un liant.

7. Procédé permettant de produire un ensemble LCD destiné à l'affichage d'une image, ledit procédé comprenant :
l'adhésion de manière directe d'une feuille de verre de protection avant (110) à une première surface (132) d'une cellule de LCD (130) ;
l'adhésion de manière directe d'une feuille de verre de protection arrière (150) à une seconde surface (134) de la cellule de LCD (130) ;
lesdites feuilles de verre de protection avant et arrière (110, 150) comprennent un verre renforcé ;
et la fixation d'une source lumineuse (170), comprenant un corps et des points de fixation (176) se projetant hors du corps de la source lumineuse (170) et étant en contact avec la surface (154) de la feuille de verre de protection arrière (150) qui n'est pas liée à la cellule de LCD (130), de sorte qu'un vide d'air soit présent entre la source lumineuse (170) et la feuille de verre de protection arrière (150) et ladite source lumineuse (170) étant conçue pour projeter une lumière sur la surface (154) de la feuille de verre de protection arrière (150) qui n'est pas liée à la cellule de LCD (130) et à travers la cellule de LCD (130) et la feuille de verre de protection avant (110) afin d'afficher une image.

8. Procédé selon la revendication 7, un coefficient de dilatation thermique de la feuille de verre de protection avant (110) étant compris dans une plage de +/-15,0 x 10⁻⁷/°C d'un coefficient de dilatation thermique de la feuille de verre de protection arrière (150).
